# EUROPEAN PATENT SPECIFICATION

(11) **EP 4 293 686 B1**
(45) Date of publication and mention of the grant of the patent: **04.03.2026**
(21) Application number: 22917828.0
(22) Date of filing: 07.01.2022
(51) Int. Cl.: G21C 3/04, G21C 3/62, G21C 21/02, G21C 3/20, G21C 21/10

(54) **HIGH URANIUM DENSITY ATF NUCLEAR FUEL PELLET AND METHOD FOR PREPARING SAME**
ATF-KERNBRENNSTOFFPELLET MIT HOHER URANIUMDICHTE UND VERFAHREN ZUR HERSTELLUNG DESSELBEN
PASTILLE DE COMBUSTIBLE NUCLÉAIRE ATF À HAUTE DENSITÉ D'URANIUM ET PROCÉDÉ DE PRÉPARATION DE CELLE-CI

(43) Date of publication of application: 20.12.2023
(73) Proprietor: Ling Ao Nuclear Power Co., Ltd., Shenzhen, Guangdong 518028 (CN); China Nuclear Power Technology Research Institute Co., Ltd, Shenzhen, Guangdong 518031 (CN); China General Nuclear Power Corporation, Shenzhen, Guangdong 518028 (CN); CGN Power Co., Ltd., Shenzen, Guangdong 518028 (CN)
(72) Inventor: CHEN, Mingzhou, Shenzhen, Guangdong 518031 (CN); REN, Qisen, Shenzhen, Guangdong 518031 (CN); LIAO, Yehong, Shenzhen, Guangdong 518031 (CN); WANG, Jiwei, Shenzhen, Guangdong 518031 (CN); LI, Lei, Shenzhen, Guangdong 518031 (CN); GUO, Daxi, Shenzhen, Guangdong 518031 (CN); XIE, Yiran, Shenzhen, Guangdong 518031 (CN); WEN, Jian, Shenzhen, Guangdong 518031 (CN); LI, Rui, Shenzhen, Guangdong 518031 (CN); GE, Hongen, Shenzhen, Guangdong 518031 (CN); ZHANG, Xiansheng, Shenzhen, Guangdong 518031 (CN); CHEN, Mengteng, Shenzhen, Guangdong 518031 (CN); ZHANG, Yongdong, Shenzhen, Guangdong 518031 (CN)
(74) Representative: Westphal, Mussgnug & Partner, Patentanwälte mbB
(86) International application number: PCT/CN2022/070727
(87) International publication number: WO 2023/130356

(56) References cited:
- CN-A- 109 326 363
- CN-A- 110 223 789
- CN-A- 113 012 827
- CN-A- 113 012 832
- CN-A- 113 012 832
- CN-A- 113 012 833
- CN-A- 113 012 834
- CN-A- 113 196 416
- US-A1- 2021 020 321
- US-A1- 2021 020 321

## Description

### FIELD OF THE INVENTION

The present invention relates to the field of nuclear fuel technology, and in particular to a high uranium density ATF nuclear fuel pellet and method for preparing the high uranium density ATF nuclear fuel pellet.

### DESCRIPTION OF THE RELATED ART

Uranium oxide ceramic fuel has the advantages of high melting point, low irradiation swelling, mature preparation process, low cost, and good compatibility with zirconium alloy cladding materials, making it an ideal nuclear reactor fuel. Currently, the vast majority of pressurized water reactor nuclear power fuels use UO₂ pellets. However, UO₂ has a low thermal conductivity and the fuel rod has a large temperature gradient, which increases the fuel element burnup. The fission gas release rate of the pellet increases under deep burnup, and the risk of mechanical-physical-chemical reactions (referred to as PCI effects) in the fuel rod increases.

The severe nuclear accident at Fukushima in 2011 caused a major shock to the world nuclear energy industry, making reactor safety a primary factor in the development of modern nuclear energy and urging people to think about improving the safety of reactor operations. To this end, the concept of more advanced accident-tolerant fuel (ATF) has been proposed. Compared to the conventional uranium dioxide (UO₂) fuel-zirconium alloy cladding system, ATF can significantly reduce the temperature inside the reactor and the release of radioactive materials during an accident.

With respect to the potential risks associated with the negative impact of the low thermal conductivity of UO₂ ceramic fuel on the pellet accident tolerance, various countries are competing to develop advanced nuclear fuels. Good thermal conductivity performance and high uranium density can reduce the core temperature of fuel pellet, reduce the thermal stress and PCI effect of fuel rods, and improve the accident tolerance of fuel elements, which are an important research direction for the development of high performance fuel pellet.

Carbides, nitrides and silicides of uranium are covalently bonded compounds formed by metallic uranium elements and non-metallic elements, which have both metallic and ceramic properties. The non-metallic elements C, N, and Si in the above compounds have small atomic weights and small neutron absorption cross sections, and are important research targets for ATF fuels with high uranium density and high thermal conductivity. However, uranium carbides, uranium nitrides and uranium silicides have poor oxidation resistance and are prone to react with water and water vapor, resulting in loss of pellet integrity, and thus cannot be directly used as pellet materials for water-cooled nuclear reactors.

In order to improve the oxidation resistance of the above mentioned high uranium density nuclear fuel, various methods have been tried, which include: (1) coating the surface of high uranium density nuclear fuel particles with a layer of oxidation resistant material; (2) dispersing high uranium density nuclear fuel particles into an inert metal or ceramic matrix; (3) homogeneously mixing high uranium density nuclear fuel particles with a matrix material to form a solid solution. However, experimental results show that the above methods only improve the antioxidant properties of high uranium density materials, and still cannot completely solve the problem of their reaction with water and the destruction of the structural integrity of the pellet.

High uranium density ATF nuclear fuel pellets and methods for preparing a high uranium density ATF nuclear fuel pellet are known, for example, from CN 113 012 832 A (22.06.2021, CHINA NORTH NUCLEAR FUEL CO LTD) and US 2021/020321 A1 (21.01.2021, LAHODA EDWARD J [US] ET AL).

### SUMMARY OF THE INVENTION

The technical problem to be solved by the present invention is to provide a high uranium density ATF nuclear fuel pellet suitable for water-cooled nuclear reactors and a method for preparing the same. The technical problem underlying the present application is solved by a high uranium density accident-tolerant fuel, ATF, nuclear fuel pellet having the features of claim 1, as well as by a method for preparing a high uranium density accident-tolerant fuel, ATF, nuclear fuel pellet having the features of claim 8.

Further embodiments of the present invention are defined in the dependent claims.

In the high uranium density ATF nuclear fuel pellet of the present invention, the high uranium density nuclear fuel is disposed inside the pellet, which increases the uranium loading of the pellet and effectively reduces the pellet center temperature, thus improving economic performance and safety of the reactor operation. In addition, the isolation layer and the peripheral zone sequentially wrap the inner zone containing the high uranium density nuclear fuel and form a double antioxidant shielding layer, which avoids the high uranium density nuclear fuel from reacting with the external water or water vapor, and improves the overall oxidation resistance of the pellet, thereby realizing the application of the high uranium density nuclear fuel pellet in water-cooled nuclear reactors and improving the accident tolerance of the nuclear reactors.

### BRIEF DESCRIPTION OF THE DRAWINGS

The present invention will be further described below in connection with the accompanying drawings and embodiments, in which:
Fig. 1 is a transverse cross-sectional view of a high uranium density ATF nuclear fuel pellet of an embodiment of the present invention;
Fig. 2 is a longitudinal cross-sectional view of a high uranium density ATF nuclear fuel pellet of an embodiment of the present invention.

### DETAILED DESCRIPTION OF EMBODIMENTS

In order to have a better understanding of the technical features, purposes and effects of the present invention, specific embodiments of the present invention are described in detail with reference to the accompanying drawings.

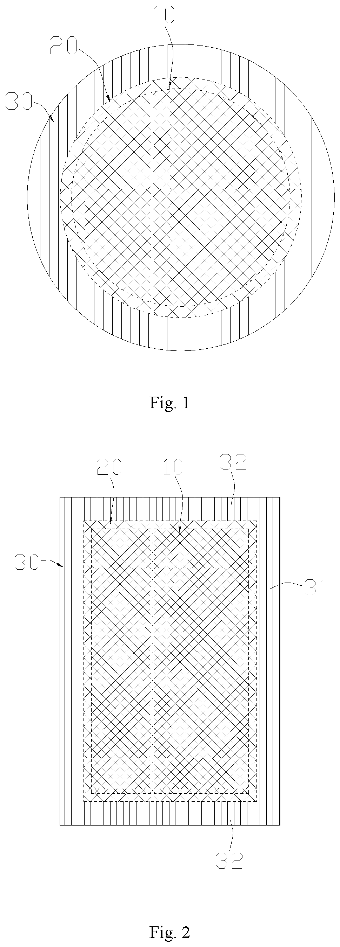

As shown in Figs. 1 and 2, the high uranium density ATF nuclear fuel pellet of the present invention includes a columnar inner zone 10, an isolation layer 20 wrapped around an outer surface of the inner zone 10, and a peripheral zone 30 wrapped around the isolation layer 20 and the inner zone 10. The peripheral zone 30, the isolation layer 20, and the inner zone 10 are connected into one complete fuel pellet.

The inner zone 10 is formed by a water and water vapor oxidation resistant nuclear fuel and a high uranium density nuclear fuel. The water and water vapor oxidation resistant nuclear fuel includes at least one of a UO₂ and ThO₂ mixture, UO₂ and PuO₂. That is, it may include the UO₂ and ThO₂ mixture, include UO₂, include PuO₂, or include two or more of the three aforementioned. The high uranium density nuclear fuel includes at least one of UN, UC, PuN, ThN, and U₃Si₂. When a non-nitride material (e.g., UC, U₃Si₂) is selected for the high uranium density nuclear fuel, the problem of using ¹⁵N isotopes can be eliminated, and the manufacturing cost of the pellet can be reduced, which are helpful for its commercial applications. Therefore, when the above issues are taken into account, at least one of UC and U₃Si₂ is preferred for the high uranium density nuclear fuel.

The peripheral zone 30 is formed by a water and water vapor oxidation resistant nuclear fuel, and the water and water vapor oxidation nuclear fuel of the peripheral zone 30 includes at least one of UO₂, PuO₂, and a UO₂ and ThO₂ mixture. That is, it may include a UO₂ and ThO₂ mixture, include UO₂, include PuO₂, or include two or more of the three aforementioned. The water and water vapor oxidation resistant nuclear fuel of the peripheral zone 30 and the water and water vapor oxidation nuclear fuel of the inner zone 10 may be flexibly selected from the same oxide, or from different oxides, depending on the actual needs.

The mass of the high uranium density nuclear fuel is 3% to 50%, preferably less than 50%, of the total mass of the inner zone 10 and the isolation layer 20.

The isolation layer 20 is arranged between the peripheral zone 30 and the inner zone 10, and cooperates with the peripheral zone 30 to form a double antioxidant shielding layer to protect the inner zone 10. The isolation layer 20 is made of a metal nitride, such as at least one of CrN, ZrN, AlN and Cr₂N. The metal nitride may react with water or water vapor to form an oxide layer, thus achieving antioxidant protection.

The isolation layer 20 has a thickness less than 1mm, preferably 30µm-100µm.

In case the peripheral zone 30 is cracked (the peripheral zone 30 is prone to cracking especially when made of UO₂), the presence of the isolation zone 20 effectively prevents the water and water vapor from entering the inner zone 10 through the crack, thus preventing the UN present in the inner zone 10 from reacting with high temperature water or water vapor which would cause crushing and destruction of the inner zone 10.

In the present invention, considering that the high uranium density nuclear fuel is easy to react with the water and water vapor and cannot be directly applied in water-cooled nuclear reactors, the inner zone 10 is made by mixing the high uranium density nuclear fuel and the water and water vapor oxidation resistant nuclear fuel, and the isolation layer 20 and the peripheral zone 30 made by the water and water vapor oxidation resistant nuclear fuel and isolation layer 20 are sequentially wrapped around the outer side of the entire inner zone 10, with the inner zone 10 serving as an inner core portion of the entire nuclear fuel pellet, such that the inner zone 10, where the high uranium density nuclear fuel is located, is diffused in a directional manner inside the nuclear fuel pellet, and the high uranium density nuclear fuel is isolated from the outside water or water vapor, thereby avoiding or slowing down contact and reaction of the high uranium density nuclear fuel with the outside water or water vapor.

Further, in the inner zone 10, a particle size of the high uranium density nuclear fuel is smaller than a particle size of the water and water vapor oxidation resistant nuclear fuel, such that the water and water vapor oxidation resistant nuclear fuel can wrap the high uranium density nuclear fuel to form an effective antioxidant shield layer. Preferably, the particle size of the high uranium density nuclear fuel is 0.8 times or less, preferably 0.1 times or less, the particle size of the water and water vapor oxidation resistant nuclear fuel.

As desired, the surface of the high uranium density nuclear fuel can also be coated with an antioxidant protective layer to improve the effect of isolating the high uranium density nuclear fuel from the water or water vapor. The antioxidant protective layer is made of at least one of Cr₂O₃ and Al₂O₃; alternatively, the antioxidant protective layer is made of at least one of Nb, Cr, Al, W, Mo, CrN, ZrN, AlN and Cr₂N, which are capable of forming an oxide layer upon reaction with water or water vapor. The material of the antioxidant protective layer has a thickness preferably in the order of micron or submicron.

Nuclear fuel pellets usually have a structure in the form of a column. Correspondingly, in the present invention, the inner zone 10 is of a columnar structure, preferably a cylinder. The peripheral zone 30 wraps the entire inner zone 10, including sides and ends of the inner zone 10. Therefore, as shown in Fig. 2, the structure of the peripheral zone 30 may further include a barrel 31 enclosing an outer circumference of the inner zone 10, and two end caps 32 attached to opposite ends of the barrel 31 and covering opposite ends of the inner zone 10. The isolation layer 20 is provided corresponding to an outer structure of the inner zone 10 or an inner structure of the peripheral zone 30, to be connected between the inner zone 10 and the peripheral zone 30.

To ensure that the high uranium density nuclear fuel with high thermal conductivity performance plays a desirable role in the nuclear fuel pellet, the inner zone 10, where the high uranium density nuclear fuel is located, occupies the main body of the whole nuclear fuel pellet, so the peripheral zone 30 is set less than the inner zone 10 in volume and thickness. As an option, the thickness of the peripheral zone 30 is less than or equal to 1/3 of the radius of the high uranium density ATF nuclear fuel pellet.

The high uranium density ATF nuclear fuel pellet of the present invention is prepared mainly by high density sintering materials into one piece, and the overall average density reaches more than 95% of the theoretical density (>95% TD).

Referring to Figs. 1 and 2, a first embodiment of a method for preparing a high uranium density ATF nuclear fuel pellet of the present invention includes the following steps:

S1, mixing a water and water vapor oxidation resistant nuclear fuel with a high uranium density nuclear fuel and pressing the resulted mixture into a columnar blank, and pressing a water and water vapor oxidation resistant nuclear fuel into a peripheral blank.

The specific water and water vapor oxidation resistant nuclear fuel powder and the high uranium density nuclear fuel powder are pre-determined and the particle size of both are selected so that the particle size of the high uranium density nuclear fuel powder is smaller than that of the water and water vapor oxidation resistant nuclear fuel powder. The above two powders are mixed and placed in the corresponding mold and pressed by cold isostatic pressing to form the columnar blank.

The surface of the high uranium density nuclear fuel can be optionally coated with an antioxidant protective layer, as desired.

The water and water vapor oxidation resistant nuclear fuel powder for the peripheral blank can be of the same type as the columnar blank, and the particle size is also larger than that of the high uranium density nuclear fuel powder. The water and water vapor oxidation resistant nuclear fuel powder is placed in a mold and pressed by cold isostatic pressing into two tubular blanks, each with one open end and one closed end; alternatively, the water and water vapor oxidation resistant nuclear fuel powder is pressed by cold isostatic pressing into a tubular blank and an end cap blank, the tubular blank having one open end and one closed end, and the end cap blank being fitted to the open end of the tubular blank.

S2. disposing an isolation material on an outer surface of the columnar blank to form an isolation layer 20.

The isolation material is made of metal nitride. The metal nitride includes at least one of CrN, ZrN, AlN and Cr₂N. The isolation material is formed on all outer surfaces of the columnar blank by sputtering or spraying, etc.

S3. placing the columnar blank with the isolation layer 20 into the peripheral blank.

In one embodiment in which the peripheral blank includes two tubular blanks, in step S3, the columnar blank is placed into one tubular blank, and the other tubular blank is docked onto the one tubular blank, such that the two tubular blanks are docked to form the peripheral blank, with the columnar blank being enclosed herein. Alternatively, the two tubular blanks arranged opposite each other are sleeved around the columnar blank and docked to form the peripheral blank, with the columnar blank being enclosed therein.

In another embodiment in which the peripheral blank includes a tubular blank and an end cap blank, in step S3, the columnar blank is placed into the tubular blank, and then the end cap blank is fitted to the open end of the tubular blank and covers the columnar blank to enclose the columnar blank within the tubular blank.

S4. Performing densification sintering such that the columnar blank and the peripheral blank respectively form the inner zone 10 and the peripheral zone 30 and are connected as one, and the isolation layer 20 is located at a connection area of the two to produce the high uranium density ATF nuclear fuel pellet.

The sintering temperature is 1000°C-2000°C, and the sintering pressure is 40MPa-150MPa. To avoid the formation of carbides of U, a carbon-free mold is used for placing of the peripheral blank and the columnar blank during sintering. In addition, during sintering, after the temperature is increased to 1000°C, the temperature increase rate is controlled to be no higher than 30°C/min to ensure the density of the formed peripheral zone 30, isolation layer 20 and inner zone 10 and to reduce density difference between the three.

When the conventional hot pressing sintering process is used for densification sintering, the sintering temperature is 1600°C-2000°C, and the temperature is maintained for more than 3 hours after reaching the required sintering temperature.

When the field-assisted sintering process is used for densification sintering, the sintering temperature is 1500°C-1900°C, and the temperature is maintained for less than or equal to 60 minutes after reaching the required sintering temperature.

For the field-assisted sintering process, a pulsed-current spark plasma sintering (SPS) process or a current-activated hot-press sintering process using direct current can be used. The field-assisted sintering process enables rapid formation of the nuclear fuel pellet and a high density of more than 95% of theoretical density.

Further, when the field-assisted sintering process is used, a power supply system is added to energize and heat the carbon-free mold in which the peripheral blank and the columnar blank are placed to provide radial auxiliary heating to the columnar blank and the peripheral blank; alternatively, the heating current of the field-assisted sintering is disturbed by an alternating magnetic field generated by the coil of the power supply system to create multi-directional heating of the columnar blank and the peripheral blank.

Referring to Figs. 1 and 2, a second embodiment of the method for preparing a high uranium density ATF nuclear fuel pellet of the present invention includes the following steps:
S1. pressing the water and water vapor oxidation resistant nuclear fuel into a peripheral blank.

The peripheral blank is preferably formed by cold isostatic pressing.

In one embodiment, the peripheral blank includes a tubular blank and an end cap blank; one end of the tubular blank is open and the other end is closed; the end cap blank matches the open end of the tubular blank.

In another embodiment, the peripheral blank includes a tubular blank; one end of the tubular blank is open and the other end is closed.

S2. disposing an isolation material on an inner surface of the peripheral blank to form an isolation layer 20;

The isolation material is made of metal nitride The metal nitride includes at least one of CrN, ZrN, AlN and Cr₂N. The isolation material is formed on all inner surfaces of the peripheral blank, including the inner surface of the tubular blank, and one surface of the end cap blank, by sputtering or spraying, etc.

S3. mixing the water and water vapor oxidation resistant nuclear fuel with a high uranium density nuclear fuel and placing the resulted mixture into the peripheral blank with the isolation layer 20.

The specific water and water vapor oxidation resistant nuclear fuel powder and the high uranium density nuclear fuel powder are pre-determined and the particle size of both are selected so that the particle size of the high uranium density nuclear fuel powder is smaller than the particle size of the water and water vapor oxidation resistant nuclear fuel powder. The above two powders are evenly mixed and placed in the peripheral blank.

The surface of the high uranium density nuclear fuel can be optionally coated with an antioxidant protective layer, as desired.

With respect to the peripheral blank including the tubular blank and the end cap blank, Step S3 is performed as follows: the water and water vapor oxidation resistant nuclear fuel is mixed with the high uranium density nuclear fuel and the resulted mixture is loaded into the tubular blank, and the end cap blank is fitted to the open end of the tubular blank to enclose the columnar blank within the tubular blank.

With respect to the peripheral blank including the tubular blank, step S3 is performed as follows: the tubular blank is placed into the mold, a mixture of the water and water vapor oxidation resistant nuclear fuel and the high uranium density nuclear fuel is loaded into the tubular blank, and then a water and water vapor oxidation resistant nuclear fuel is placed to cover the open end of the tubular blank to seal the tubular blank and cooperates with the tubular blank to form the complete peripheral blank. After subsequent densification sintering, the water and water vapor oxidation resistant nuclear fuel covering the open end of the tubular blank forms an end cap that is connected to the tubular blank to form the peripheral zone 30.

S4. performing densification sintering such that the columnar blank and the peripheral blank respectively form the inner zone 10 and the peripheral zone 30 and are connected as one, and the isolation layer 20 is located at a connection area of the two to produce the high uranium density ATF nuclear fuel pellet.

The sintering temperature is 1000°C-2000°C, and the sintering pressure is 40MPa-150MPa. To avoid the formation of carbides of U, a carbon-free mold is used for placing of the peripheral blank and the columnar blank during sintering. In addition, during sintering, after the temperature is increased to 1000°C, the temperature increase rate is controlled to be no higher than 30°C/min to ensure the density of the formed peripheral zone 30, isolation layer 20 and inner zone 10 and to reduce density difference between the three.

When the conventional hot pressing sintering process is used for densification sintering, the sintering temperature is 1600°C-2000°C, and the temperature is maintained for more than 3 hours after reaching the required sintering temperature.

When the field-assisted sintering process is used for densification sintering, the sintering temperature is 1500°C-1900°C, and the temperature is maintained for less than or equal to 60 minutes after reaching the required sintering temperature.

For the field-assisted sintering process, a pulsed-current spark plasma sintering (SPS) process or a current-activated hot-press sintering process using direct current can be used. The field-assisted sintering process enables rapid formation of nuclear fuel pellets and a high density of more than 95% of theoretical density.

Further, when the field-assisted sintering process is used, a power supply system is added to energize and heat the carbon-free mold in which the peripheral blank and the columnar blank are placed to provide radial auxiliary heating to the columnar blank and the peripheral blank; alternatively, the heating current of the field-assisted sintering is disturbed by an alternating magnetic field generated by the coil of the power supply system to create multi-directional heating of the columnar blank and the peripheral blank.

Referring to Figs. 1 and 2, a third embodiment of the method for preparing a high uranium density ATF nuclear fuel blank of the present invention includes the following steps:
S1. mixing a water and water vapor oxidation resistant nuclear fuel with a high uranium density nuclear fuel and pressing the resulted mixture into a columnar blank.

The specific water and water vapor oxidation resistant nuclear fuel powder and the high uranium density nuclear fuel powder are pre-determined and the particle size of both are selected so that the particle size of the high uranium density nuclear fuel powder is smaller than that of the water and water vapor oxidation resistant nuclear fuel powder. The above two powders are mixed and placed in the corresponding mold and pressed by cold isostatic pressing to form the columnar blank.

S2. disposing an isolation material on an outer surface of the columnar blank to form the isolation layer 20;

The isolation material is made of metal nitride. The metal nitride includes at least one of CrN, ZrN, AlN and Cr₂N. The isolation material is formed on all outer surfaces of the columnar blank by sputtering or spraying, etc.

S3. loading a water and water vapor oxidation resistant nuclear fuel into a mold, and placing the columnar blank with the isolation layer 20 into the mold and embedding the columnar blank within the water and water vapor oxidation resistant nuclear fuel, such that an outer periphery and opposite ends of the columnar blank are all covered with the water and water vapor oxidation resistant nuclear fuel.

The water and water vapor oxidation resistant nuclear fuel of the peripheral blank may be of the same type as the columnar blank, and the particle size is also larger than that of the high uranium density nuclear fuel powder.

S4. performing densification sintering such that the water and water vapor oxidation resistant nuclear fuel forms the peripheral zone 30, the columnar blank forms the inner zone 10 that is connected to the peripheral zone 30, and the isolation layer 20 is located at a connection area of the two to produce the high uranium density ATF nuclear fuel pellet.

The sintering temperature is 1000°C-2000°C, and the sintering pressure is 40MPa-150MPa. To avoid the formation of carbides of U, a carbon-free mold is used for placing of the peripheral blank and the columnar blank during sintering. In addition, during sintering, after the temperature is increased to 1000°C, the temperature increase rate is controlled to be no higher than 30°C/min to ensure the density of the formed peripheral zone 30, isolation layer 20 and inner zone 10 and to reduce density difference between the three.

When the conventional hot pressing sintering process is used for densification sintering, the sintering temperature is 1600°C-2000°C, and the temperature is maintained for more than 3 hours after reaching the required sintering temperature.

When the field-assisted sintering process is used for densification sintering, the sintering temperature is 1500°C-1900°C, and the temperature is maintained for less than or equal to 60 minutes after reaching the required sintering temperature.

For the field-assisted sintering process, a pulsed-current spark plasma sintering (SPS) process or a current-activated hot-press sintering process using direct current can be used. The field-assisted sintering process enables rapid formation of nuclear fuel pellets and a high density of more than 95% of theoretical density.

Further, when the field-assisted sintering process is used, a power supply system is added to energize and heat the carbon-free mold in which the peripheral blank and the columnar blank are placed to provide radial auxiliary heating to the columnar blank and the peripheral blank; alternatively, the heating current of the field-assisted sintering is disturbed by an alternating magnetic field generated by the coil of the power supply system to create multi-directional heating of the columnar blank and the peripheral blank.

In addition, in the preparation method of each of the above embodiments, the peripheral surface of the obtained high uranium density ATF nuclear fuel pellet can finally be processed, chamfered and so on, as needed.

The above are only embodiments of the present invention and do not limit the scope of the present invention. The invention is defined in the appended claims.

## Claims

1. A high uranium density accident-tolerant fuel, ATF, nuclear fuel pellet, comprising a columnar inner zone (10),
**characterized in that** the ATF nuclear fuel pellet further comprises an isolation layer (20) wrapped around an outer surface of the inner zone (10), and a peripheral zone (30) wrapped around the isolation layer (20);
the inner zone (10) being formed by a water and water vapor oxidation resistant nuclear fuel and a high uranium density nuclear fuel; the peripheral zone (30) being formed by a water and water vapor oxidation resistant nuclear fuel;
the high uranium density nuclear fuel having a mass of 3% to 50% of the total mass of the inner zone (10) and the isolation layer (20);
wherein the water and water vapor oxidation resistant nuclear fuel comprises at least one of UO₂, PuO₂, and a mixture of UO₂ and ThO₂;
wherein the high uranium density nuclear fuel comprises at least one of UN, UC, PuN, ThN, and U₃Si₂;
wherein the isolation layer is made of metal nitride; and
wherein the metal nitride comprises at least one of CrN, ZrN, AlN and Cr₂N.

2. The high uranium density ATF nuclear fuel pellet according to claim 1, **characterized in that** the high uranium density nuclear fuel has a particle size smaller than that of the water and water vapor oxidation resistant nuclear fuel.

3. The high uranium density ATF nuclear fuel pellet according to claim 2, **characterized in that** the particle size of the high uranium density nuclear fuel is 0.8 times or less the particle size of the water and water vapor oxidation resistant nuclear fuel.

4. The high uranium density ATF nuclear fuel pellet according to claim 1, **characterized in that** the peripheral zone (30) comprises a barrel (31) enclosing an outer circumference of the inner zone (10), and two end caps (32) attached to opposite ends of the barrel (31) and covering opposite ends of the inner zone (10).

5. The high uranium density ATF nuclear fuel pellet according to claim 1, **characterized in that** the peripheral zone (30) has a thickness equal to or less than 1/3 of the radius of the high uranium density ATF nuclear fuel pellet.

6. The high uranium density ATF nuclear fuel pellet according to any one of claims 1-5, **characterized in that** a surface of the high uranium density nuclear fuel is coated with an antioxidant protective layer.

7. The high uranium density ATF nuclear fuel pellet according to claim 6, **characterized in that** the antioxidant protective layer is made of at least one of Cr₂O₃ and Al₂O₃; or, the antioxidant protective layer is made of at least one of Nb, Cr, Al, W, Mo, CrN, ZrN, AlN and Cr₂N.

8. A method for preparing a high uranium density accident-tolerant fuel, ATF, nuclear fuel pellet of any one of claims 1-7, **characterized by** comprising the steps of:
S1. mixing a water and water vapor oxidation resistant nuclear fuel with a high uranium density nuclear fuel and pressing the resulted mixture into a columnar blank, and pressing a water and water vapor oxidation resistant nuclear fuel into a peripheral blank;
S2. disposing an isolation material on an outer surface of the columnar blank to form an isolation layer (20);
S3. placing the columnar blank with the isolation layer (20) into the peripheral blank;
S4. performing densification sintering such that the columnar blank and the peripheral blank respectively form the inner zone (10) and the peripheral zone (30) and are connected as one, and the isolation layer (20) is located at a connection area of the two,
wherein the water and water vapor oxidation resistant nuclear fuel comprises at least one of UO₂, PuO₂, and a mixture of UO₂ and ThO₂;
wherein the high uranium density nuclear fuel comprises at least one of UN, UC, PuN, ThN, and U₃Si₂;
wherein the isolation layer is made of metal nitride; and
wherein the metal nitride comprises at least one of CrN, ZrN, AlN and Cf₂N.

9. The method for preparing a high uranium density ATF nuclear fuel pellet according to claim 8, **characterized in that** in step S1, the peripheral blank comprises two tubular blanks, each of the tubular blanks is open at one end and closed at an opposite end;
in step S3, the columnar blank is placed into one tubular blank, and the other tubular blank is docked onto the one tubular blank to form the peripheral blank, with the columnar blank being enclosed herein; or, the two tubular blanks arranged opposite each other are sleeved around the columnar blank and docked to form the peripheral blank, with the columnar blank being enclosed therein.

10. The method for preparing a high uranium density ATF nuclear fuel pellet according to claim 8, **characterized in that** in step S1, the peripheral blank comprises a tubular blank open at one end thereof and an end cap blank;
in step S3, the columnar blank is placed into the tubular blank, and then the end cap blank is fitted onto the open end of the tubular blank to cover the columnar blank so as to enclose the columnar blank within the tubular blank.

11. The method for preparing a high uranium density ATF nuclear fuel pellet according to claim 8, **characterized in that** in step S4, the sintering temperature is 1000°C-2000°C, and the sintering pressure is 40MPa-150MPa.

12. The method for preparing a high uranium density ATF nuclear fuel pellet according to claim 11, **characterized in that** in step S4, the densification sintering is performed by a field-assisted sintering process at a sintering temperature of 1500°C-1900°C.

## Patentansprüche

1. Kernbrennstoffpellet mit unfalltolerantem Brennstoff (ATF) mit hoher Uraniumdichte, umfassend eine säulenförmige Innenzone (10), **dadurch gekennzeichnet, dass** das ATF-Kernbrennstoffpellet ferner eine Isolierschicht (20), die um eine Außenoberfläche der Innenzone (10) gewickelt ist, und eine periphere Zone (30), die um die Isolierschicht (20) gewickelt ist, umfasst;
die Innenzone (10) aus einem wasser- und wasserdampfoxidationsresistenten Kernbrennstoff und einem Kernbrennstoff mit hoher Uraniumdichte ausgebildet ist; die periphere Zone (30) aus einem wasser- und wasserdampfoxidationsresistenten Kernbrennstoff ausgebildet ist;
der Kernbrennstoff mit hoher Uraniumdichte eine Masse von 3 bis 50 % der Gesamtmasse der Innenzone (10) und der Isolierschicht (20) aufweist;
wobei der wasser- und wasserdampfoxidationsresistente Kernbrennstoff mindestens eines von UO₂, PuO₂ oder eine Mischung aus UO₂ und ThO₂ umfasst;
wobei der Kernbrennstoff mit hoher Uraniumdichte mindestens eines von UN, UC, PuN, ThN und U₃Si₂ umfasst;
wobei die Isolierschicht aus Metallnitrid hergestellt ist; und wobei das Metallnitrid mindestens eines von CrN, ZrN, AlN und Cr₂N umfasst.

2. ATF-Kernbrennstoffpellet mit hoher Uraniumdichte nach Anspruch 1, **dadurch gekennzeichnet, dass** der Kernbrennstoff mit hoher Uraniumdichte eine Partikelgröße aufweist, die kleiner ist als die des wasser- und wasserdampfoxidationsresistenten Kernbrennstoffs.

3. ATF-Kernbrennstoffpellet mit hoher Uraniumdichte nach Anspruch 2, **dadurch gekennzeichnet, dass** die Partikelgröße des Kernbrennstoffs mit hoher Uraniumdichte das 0,8-fache oder weniger als die Partikelgröße des wasser- und wasserdampfoxidationsresistenten Kernbrennstoffs ist.

4. ATF-Kernbrennstoffpellet mit hoher Uraniumdichte nach Anspruch 1, **dadurch gekennzeichnet, dass** die peripheren Zone (30) einen Zylinder (31) umfasst, der einen äußeren Umfang der Innenzone (10) und zwei Endkappen (32), die an gegenüberliegenden Enden des Zylinders (31) befestigt sind und die gegenüberliegenden Enden der Innenzone (10) abdecken, umschließt.

5. ATF-Kernbrennstoffpellet mit hoher Uraniumdichte nach Anspruch 1, **dadurch gekennzeichnet, dass** die periphere Zone (30) eine Dicke aufweist, die gleich oder weniger als 1/3 des Radius des ATF-Kernbrennstoffpellets mit hoher Uraniumdichte ist.

6. ATF-Kernbrennstoffpellet mit hoher Uraniumdichte nach einem der Ansprüche 1-5, **dadurch gekennzeichnet, dass** eine Oberfläche des Kernbrennstoffs mit hoher Uraniumdichte mit einer antioxidativen Schutzschicht überzogen ist.

7. ATF-Kernbrennstoffpellet mit hoher Uraniumdichte nach Anspruch 6, **dadurch gekennzeichnet, dass** die antioxidative Schutzschicht aus mindestens einem von Cr₂O₃ und Al₂O₃ hergestellt ist; oder die antioxidative Schutzschicht aus mindestens einem von Nb, Cr, Al, W, Mo, CrN, ZrN, AlN und Cr₂N hergestellt ist.

8. Verfahren zur Herstellung eines Kernbrennstoffpellets mit unfalltolerantem Brennstoff (AFT) mit hoher Uraniumdichte nach einem der Ansprüche 1-7, **dadurch gekennzeichnet, dass** es die folgende Schritte umfasst:
S1. Mischen eines wasser- und wasserdampfoxidationsresistenten Kernbrennstoffs mit einem Kernbrennstoff mit hoher Uraniumdichte und Pressen der resultierenden Mischung zu einem Säulenrohling und Pressen eines wasser- und wasserdampfoxidationsresistenten Kernbrennstoffs zu einem peripheren Rohling;
S2. Anordnen eines Isoliermaterials an einer Außenoberfläche des Säulenrohlings, um eine Isolierschicht (20) auszubilden;
S3. Platzieren des Säulenrohlings mit der Isolierschicht (20) in dem peripheren Rohling;
S4. Durchführen einer Verdichtungssinterung, derart, dass der Säulenrohling und der periphere Rohling jeweils die Innenzone (10) und die periphere Zone (30) ausbilden und zu einer Einheit verbunden sind, wobei sich die Isolierschicht (20) an der Verbindungsstelle der beiden befindet,
wobei der wasser- und wasserdampfoxidationsresistente Kernbrennstoff mindestens eines von UO₂, PuO₂ oder eine Mischung aus UO₂ und ThO₂ umfasst;
wobei der Kernbrennstoff mit hoher Uraniumdichte mindestens eines von UN, UC, PuN, ThN und U₃Si₂ umfasst;
wobei die Isolierschicht aus Metallnitrid hergestellt ist; und
wobei das Metallnitrid mindestens eines von CrN, ZrN, AlN und Cr₂N umfasst.

9. Verfahren zur Herstellung eines ATF-Kernbrennstoffpellets mit hoher Uraniumdichte nach Anspruch 8, **dadurch gekennzeichnet, dass** in Schritt S1 der periphere Rohling zwei Rohrrohlinge umfasst, wobei jeder der Rohrrohlinge an einem Ende offen und an einem gegenüberliegenden Ende geschlossen ist;
in Schritt S3 der Säulenrohling in einem Rohrrohling platziert wird, und der andere Rohrrohling an den einen Rohrrohling angedockt ist, um den peripheren Rohling auszubilden, wobei der Säulenrohling darin eingeschlossen ist; oder die zwei einander gegenüberliegend angeordneten Rohrrohlinge um den Säulenrohling herumgeführt und angedockt werden, um den peripheren Rohling auszubilden, wobei der Säulenrohling darin eingeschlossen ist.

10. Verfahren zur Herstellung eines ATF-Kernbrennstoffpellets mit hoher Uraniumdichte nach Anspruch 8, **dadurch gekennzeichnet, dass** in Schritt S1 der periphere Rohling einen Rohrrohling, der an einem Ende davon offen ist, und einen Endkappenrohling umfasst;
in Schritt S3 der Säulenrohling in dem Rohrrohling platziert wird, und anschließend der Endkappenrohling auf das offene Ende des Rohrrohlings aufgesetzt wird, um den Säulenrohling abzudecken und ihn innerhalb des Rohrrohlings einzuschließen.

11. Verfahren zur Herstellung eines ATF-Kernbrennstoffpellets mit hoher Uraniumdichte nach Anspruch 8, **dadurch gekennzeichnet, dass** in Schritt S4 die Sintertemperatur 1000 °C-2000°C ist und der Sinterdruck 40 MPa-150 MPa ist.

12. Verfahren zur Herstellung eines ATF-Kernbrennstoffpellets mit hoher Uraniumdichte nach Anspruch 11, **dadurch gekennzeichnet, dass** in Schritt S4 die Verdichtungssinterung durch einen feldunterstützten Sinterungsvorgang bei einer Sintertemperatur von 1500 °C-1900 °C durchgeführt wird.

## Revendications

1. Pastille de combustible nucléaire tolérant aux accidents, ATF, à haute densité d'uranium, comprenant une zone intérieure colonnaire (10), **caractérisée en ce que** la pastille de combustible nucléaire ATF comprend également une couche d'isolation (20) enroulée autour d'une surface extérieure de la zone intérieure (10), et une zone périphérique (30) enroulée autour de la couche d'isolation (20) ;
la zone intérieure (10) étant formée par un combustible nucléaire résistant à l'oxydation par l'eau et la vapeur d'eau et par un combustible nucléaire à haute densité d'uranium ; la zone périphérique (30) étant formée par un combustible nucléaire résistant à l'oxydation par l'eau et la vapeur d'eau ;
le combustible nucléaire à haute densité d'uranium ayant une masse comprise entre 3 % et 50 % de la masse totale de la zone intérieure (10) et de la couche d'isolation (20) ;
dans lequel le combustible nucléaire résistant à l'oxydation par l'eau et la vapeur d'eau comprend au moins l'un des composés suivants : UO₂, PuO₂, et un mélange de UO₂ et de ThO₂ ;
dans lequel le combustible nucléaire à haute densité d'uranium comprend au moins l'un des composés suivants : UN, UC, PuN, ThN et U₃Si₂ ;
dans lequel la couche d'isolation est constituée de nitrure métallique ; et
dans lequel le nitrure métallique comprend au moins l'un des composés suivants : CrN, ZrN, AlN et Cr₂N.

2. Pastille de combustible nucléaire ATF à haute densité d'uranium selon la revendication 1, **caractérisée en ce que** le combustible nucléaire à haute densité d'uranium a une taille de particules inférieure à celle du combustible nucléaire résistant à l'oxydation par l'eau et la vapeur d'eau.

3. Pastille de combustible nucléaire ATF à haute densité d'uranium selon la revendication 2, **caractérisée en ce que** la taille de particules du combustible nucléaire à haute densité d'uranium est d'au plus 0,8 fois la taille de particules du combustible nucléaire résistant à l'oxydation par l'eau et la vapeur d'eau.

4. Pastille de combustible nucléaire ATF à haute densité d'uranium selon la revendication 1, **caractérisée en ce que** la zone périphérique (30) comprend un cylindre (31) renfermant une circonférence extérieure de la zone intérieure (10), et deux capuchons d'extrémité (32) fixés aux extrémités opposées du cylindre (31) et recouvrant les extrémités opposées de la zone intérieure (10).

5. Pastille de combustible nucléaire ATF à haute densité d'uranium selon la revendication 1, **caractérisée en ce que** la zone périphérique (30) a une épaisseur égale ou inférieure à 1/3 du rayon de la pastille de combustible nucléaire ATF à haute densité d'uranium.

6. Pastille de combustible nucléaire ATF à haute densité d'uranium selon l'une quelconque des revendications 1 à 5, **caractérisée en ce qu'**une surface du combustible nucléaire à haute densité d'uranium est revêtue d'une couche protectrice antioxydante.

7. Pastille de combustible nucléaire ATF à haute densité d'uranium selon la revendication 6, **caractérisée en ce que** la couche protectrice antioxydante est constituée d'au moins l'un des composés suivants : Cr₂O₃ et Al₂O₃ ; ou, la couche protectrice antioxydante est constituée d'au moins l'un des composés suivants : Nb, Cr, Al, W, Mo, CrN, ZrN, AlN et Cr₂N.

8. Procédé de préparation d'une pastille de combustible nucléaire tolérant aux accidents, ATF, à haute densité d'uranium selon l'une quelconque des revendications 1 à 7, **caractérisé en ce qu'**il comprend les étapes suivantes :
S1. le mélange d'un combustible nucléaire résistant à l'oxydation par l'eau et la vapeur d'eau avec un combustible nucléaire à haute densité d'uranium et le pressage du mélange résultant en une ébauche colonnaire, et le pressage d'un combustible nucléaire résistant à l'oxydation par l'eau et la vapeur d'eau en une ébauche périphérique ;
S2. la disposition d'un matériau d'isolation sur une surface extérieure de l'ébauche colonnaire pour former une couche d'isolation (20) ;
S3. le placement de l'ébauche colonnaire avec la couche d'isolation (20) dans l'ébauche périphérique ;
S4. la réalisation d'un frittage de densification de sorte que l'ébauche colonnaire et l'ébauche périphérique forment respectivement la zone intérieure (10) et la zone périphérique (30) et soient reliées en une seule pièce, et que la couche d'isolation (20) soit située dans une région de raccordement des deux,
dans lequel le combustible nucléaire résistant à l'oxydation par l'eau et la vapeur d'eau comprend au moins l'un des composés suivants : UO₂, PuO₂, et un mélange de UO₂ et de ThO₂ ;
dans lequel le combustible nucléaire à haute densité d'uranium comprend au moins l'un des composés suivants : UN, UC, PuN, ThN et U₃Si₂ ;
dans lequel la couche d'isolation est constituée de nitrure métallique ; et
dans lequel le nitrure métallique comprend au moins l'un des composés suivants : CrN, ZrN, AlN et Cr₂N.

9. Procédé de préparation d'une pastille de combustible nucléaire ATF à haute densité d'uranium selon la revendication 8, **caractérisé en ce que**, à l'étape S1, l'ébauche périphérique comprend deux ébauches tubulaires, chacune des ébauches tubulaires est ouverte à une extrémité et fermée à une extrémité opposée ;
à l'étape S3, l'ébauche colonnaire est placée dans une ébauche tubulaire, et l'autre ébauche tubulaire est arrimée sur l'une ébauche tubulaire pour former l'ébauche périphérique, l'ébauche colonnaire étant renfermée dans celle-ci ; ou, les deux ébauches tubulaires agencées opposées l'une de l'autre sont gainées autour de l'ébauche colonnaire et arrimées pour former l'ébauche périphérique, l'ébauche colonnaire étant renfermée à l'intérieur.

10. Procédé de préparation d'une pastille de combustible nucléaire ATF à haute densité d'uranium selon la revendication 8, **caractérisé en ce que**, à l'étape S1, l'ébauche périphérique comprend une ébauche tubulaire ouverte à une extrémité de celle-ci et une ébauche de capuchon d'extrémité ; à l'étape S3, l'ébauche colonnaire est placée dans l'ébauche tubulaire, puis l'ébauche de capuchon d'extrémité est montée sur l'extrémité ouverte de l'ébauche tubulaire pour recouvrir l'ébauche colonnaire de manière à renfermer l'ébauche colonnaire à l'intérieur de l'ébauche tubulaire.

11. Procédé de préparation d'une pastille de combustible nucléaire ATF à haute densité d'uranium selon la revendication 8, **caractérisé en ce que**, à l'étape S4, la température de frittage est comprise entre 1000 °C et 2000 °C et la pression de frittage est comprise entre 40 MPa et 150 MPa.

12. Procédé de préparation d'une pastille de combustible nucléaire ATF à haute densité d'uranium selon la revendication 11, **caractérisé en ce que**, à l'étape S4, le frittage de densification est réalisé par un processus de frittage assisté par champ à une température de frittage comprise entre 1500 °C et 1900 °C.
